# EUROPEAN PATENT APPLICATION

(11) **EP 4 672 236 A1**
(43) Date of publication of application: **31.12.2025**
(21) Application number: 25181409.1
(22) Date of filing: 06.06.2025
(51) Int. Cl.: G10L 21/00, G10L 15/16, G10L 25/48, G06F 3/16, H04L 51/212, G10L 15/26

(54) **REAL-TIME REPLACEMENT OF POLICY-VIOLATING CONTENT WITHIN VOICE CHAT COMMUNICATION**

(30) Priority: 27.06.2024 US 202418755812
(71) Applicant: Roblox Corporation, San Mateo, CA 94403 (US)
(72) Inventor: HEIKINHEIMO, Hannes, San Mateo, 94403 (US); SPENCE, Kyle Joseph, San Mateo, 94403 (US); HIRSCHKIND, Nameer, San Mateo, 94403 (US); YU, Xiao, San Mateo, 94403 (US)
(74) Representative: Betten & Resch

(57) **Abstract**

Some implementations relate to systems, methods, and computer-readable media for real-time replacement of policy-violating content within voice chat communication. In some implementations, a computer-implemented method obtains a real-time audio stream of voice chat communication, and divides the real-time audio stream into a number of chunks. For each chunk, the computer-implemented method: provides the audio of the chunk to a machine-learning based detection model; obtains, as output of the detection model, an indication whether policy-violating content is present in the audio of the chunk; and in response to the indication that policy-violating content is present in the audio of the chunk, modifies the audio of the chunk to mute and/or replace at least a portion of the audio of the chunk with different audio. The computer-implemented method then provides the audio stream to a client device for playback at the client device, where the audio stream is provided with a delay.

## Description

### TECHNICAL FIELD

Implementations relate generally to the field of online communication moderation. More specifically, implementations relate to methods, systems and computer readable media for real-time replacement of policy-violating content within voice chat communication.

### BACKGROUND

In the realm of online communication platforms, the integration of voice chat features has become increasingly prevalent, offering users a more immersive and interactive experience. However, the incorporation of voice communication presents challenges in maintaining a safe and civil environment, consistent with platform policies and community standards. Unlike text-based communication, which can be monitored and moderated in real-time for policy violations, voice chat presents unique difficulties in detecting and addressing inappropriate or offensive content promptly. Existing approaches to moderation primarily rely on reactive strategies, where policy violations are addressed after they occur, leading to potential harm to users and tarnishing the platform's reputation.

One common issue with current voice chat moderation methods is the inherent latency introduced by traditional speech processing and moderation techniques. Conventional automatic speech recognition (ASR) systems, while effective in transcribing speech, often operate with noticeable delays, hindering their suitability for real-time content moderation. Additionally, the dynamic nature of voice communication poses challenges in accurately identifying policy-violating content without causing disruptions or false positives. As a result, platforms often resort to limiting voice chat access to certain users or implementing manual moderation, both of which are resource-intensive and fail to provide timely intervention.

Furthermore, the absence of efficient real-time muting or replacement mechanisms for voice chat places a burden on platform administrators and moderators, who are tasked with ensuring compliance with community guidelines and policies. This reliance on human intervention not only increases operational costs but also introduces inconsistencies and delays in addressing policy violations.

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

### SUMMARY

Implementations described herein relate to methods, systems, and computer-readable media for real-time replacement of policy-violating content within voice chat communication.

According to one aspect, a computer-implemented method obtains a real-time audio stream of voice chat communication, and divides the real-time audio stream into a number of chunks, where each chunk includes audio from the real-time audio stream from a respective time window. For each chunk, the computer-implemented method: provides the audio of the chunk to a machine-learning based detection model; obtains, as output of the detection model, an indication whether policy-violating content is present in the audio of the chunk, where the detection model includes an encoder that encodes the audio of the chunk into a feature vector and a classifier that generates the indication of whether policy-violating content is present in the audio of the chunk based on the feature vector; and in response to the indication that policy-violating content is present in the audio of the chunk, modifies the audio of the chunk to mute at least a portion of the audio of the chunk and/or replace the portion of the audio of the chunk with different audio. The computer-implemented method then provides the audio stream to a client device for playback at the client device, where the audio stream is provided with a delay.

In some implementations, the computer-implemented method includes the feature vector representing speech characteristics of the audio of the chunk, where the encoder comprises one or more convolutional layers that extract local features from the audio of the chunk.

In some implementations, the computer-implemented method includes the encoder further including one or more self-attention layers, with context from one or more prior chunks being provided to the self-attention layers.

In some implementations, the computer-implemented method includes performing preprocessing that includes one or more of: removing background noise from the audio stream; converting the audio stream into a particular digital format; extracting Mel-Frequency Cepstral Coefficients from the audio stream; and any combination thereof.

In some implementations, the computer-implemented method includes the preprocessing being performed by a pre-processing layer of the detection model.

In some implementations, the computer-implemented method includes the classifier generating the indication as one of: policy-violating content being present in the audio of the chunk, or policy-violating content being absent from the audio of the chunk.

In some implementations, the computer-implemented method includes the classifier generating the indication as a category for the audio of the chunk, where the category is non-policy violating content or policy-violating content that is one of: hate speech, swearing, or any other content that may constitute a violation of policy.

In some implementations, the computer-implemented method includes modifying the audio of the chunk to mute or replace the policy-violating content being based on the category.

In some implementations, the computer-implemented method includes the detection model being trained to detect whether an input audio chunk includes one or more words from a predefined vocabulary, where the indication that policy-violating content is present in the audio of the chunk is generated when the chunk is determined to include at least one word from the predefined vocabulary.

In some implementations, the computer-implemented method includes, when the indication is that policy-violating content is present in the audio of the chunk, the detection model further outputting a time-span within the chunk that corresponds to the policy-violating content, where the portion of the audio of the chunk is from within the time-span.

In some implementations, the computer-implemented method includes the policy-violating content being a word, where the portion of the audio of the chunk is the entire time-span and where the delay is greater than or equal to the time-span and an inference time of the detection model for the chunk.

In some implementations, the computer-implemented method includes the policy-violating content being a word, where the portion of the audio of the chunk is a portion within the time-span that corresponds to a last syllable of the word, and where the delay is greater than or equal to the portion of the time-span and an inference time of the detection model for the chunk.

In some implementations, the computer-implemented method includes the encoder being a pre-trained encoder from an ASR model that includes the encoder and a separate decoder that is trained to decode the feature vector into text.

In some implementations, the computer-implemented method includes the machine-learning based detection model being trained by: obtaining a training set, where each element of the training set includes a training chunk of audio from a respective time window of a real-time audio stream, and a training label indicative of the presence of policy-violating content in the chunk of audio; and training the machine-learning based detection model via supervised learning, where the training includes, for each element in the training set: obtaining, by application of the machine-learning based detection model to the training chunk of audio, an indication of whether policy-violating content is present in the training chunk of audio, where the machine-learning based detection model includes an encoder that encodes the training chunk of audio into a feature vector and a classifier that generates the indication of whether policy-violating content is present in the training chunk of audio based on the feature vector; determining a loss value based on a comparison of the indication of whether policy-violating content is present in the training chunk of audio and the training label; and modifying one or more parameters of the machine learning-based detection model based on the loss value.

According to another aspect, a system includes one or more processors and memory coupled to the one or more processors storing instructions that, when executed by the one or more processors, cause the system to perform operations including: obtaining a real-time audio stream of voice chat communication, and dividing the real-time audio stream into a number of chunks, where each chunk includes audio from the real-time audio stream from a respective time window. For each chunk, the operations further comprise: providing the audio of the chunk to a machine-learning based detection model; obtaining, as output of the detection model, an indication whether policy-violating content is present in the audio of the chunk, where the detection model includes an encoder that encodes the audio of the chunk into a feature vector and a classifier that generates the indication of whether policy-violating content is present in the audio of the chunk based on the feature vector; and in response to the indication that policy-violating content is present in the audio of the chunk, modifying the audio of the chunk to mute at least a portion of the audio of the chunk and/or replace the portion of the audio of the chunk with different audio. The system then provides the audio stream to a client device for playback at the client device, where the audio stream is provided with a delay.

In some implementations, the system includes the feature vector representing speech characteristics of the audio of the chunk, where the encoder comprises one or more convolutional layers that extract local features from the audio of the chunk.

In some implementations, the system includes the encoder further including one or more self-attention layers, where context from one or more prior chunks is provided to the self-attention layers.

In some implementations, the instructions cause the system to perform an operation including performing pre-processing that includes one or more of: removing background noise from the audio stream; converting the audio stream into a particular digital format; extracting Mel-Frequency Cepstral Coefficients from the audio stream; and any combination thereof.

In some implementations, the system includes the pre-processing being performed by a pre-processing layer of the detection model.

According to another aspect, a non-transitory computer readable medium with instructions stored thereon is provided. The instructions stored thereon, when executed by one or more processors, cause the one or more processors to perform operations. The operations include: obtaining a real-time audio stream of voice chat communication, and dividing the real-time audio stream into a number of chunks, where each chunk includes audio from the real-time audio stream from a respective time window. For each chunk, the computer-implemented method: provides the audio of the chunk to a machine-learning based detection model; obtains, as output of the detection model, an indication whether policy-violating content is present in the audio of the chunk, where the detection model includes an encoder that encodes the audio of the chunk into a feature vector and a classifier that generates the indication of whether policy-violating content is present in the audio of the chunk based on the feature vector; and in response to the indication that policy-violating content is present in the audio of the chunk, modifies the audio of the chunk to mute at least a portion of the audio of the chunk and/or replace the portion of the audio of the chunk with different audio. The computer-implemented method then provides the audio stream to a client device for playback at the client device, where the audio stream is provided with a delay.

According to yet another aspect, portions, features, and implementation details of the systems, methods, and non-transitory computer-readable media may be combined to form additional aspects, including some aspects which omit and/or modify some or portions of individual components or features, include additional components or features, and/or other modifications, and all such modifications are within the scope of this disclosure.

### BRIEF DESCRIPTION OF DRAWINGS

FIG. 1 is a diagram of an example system architecture for providing real-time replacement of policy-violating content within voice chat communication, in accordance with some implementations.
FIG. 2 is a flow diagram illustrating a method for providing real-time replacement of policy-violating content within voice chat communication, in accordance with some implementations.
FIG. 3 is a flow diagram illustrating a method of training a machine learning-based detection model to provide real-time replacement of policy-violating content within voice chat communication, in accordance with some implementations.
FIG. 4 is a diagram illustrating an example workflow applying a machine learning-based detection model to provide real-time replacement of policy-violating content within voice chat communication, in accordance with some implementations.
FIG. 5 is a diagram illustrating an example architecture of a machine learning-based detection model for providing real-time replacement of policy-violating content within voice chat communication, in accordance with some implementations.
FIG. 6 is a block diagram that illustrates an example computing device, in accordance with some implementations.

### DETAILED DESCRIPTION

In the following detailed description, reference is made to the accompanying drawings, which form a part hereof. In the drawings, similar symbols typically identify similar components, unless context dictates otherwise. The illustrative implementations described in the detailed description, drawings, and claims are not meant to be limiting. Other implementations may be utilized, and other changes may be made, without departing from the scope of the subject matter presented herein. Aspects of the present disclosure, as generally described herein, and illustrated in the Figures, can be arranged, substituted, combined, separated, and designed in a wide variety of different configurations, all of which are contemplated herein.

References in the specification to "some implementations", "an implementation", "an example implementation", etc. indicate that the implementation described may include a particular feature, structure, or characteristic, but every implementation may not necessarily include the particular feature, structure, or characteristic. Moreover, such phrases are not necessarily referring to the same implementation. Further, when a particular feature, structure, or characteristic is described in connection with an implementation, such feature, structure, or characteristic may be effected in connection with other implementations whether or not explicitly described.

One or more implementations described herein relate to a computer-implemented method for real-time detection and muting or replacing of policy-violating content in voice chat communications. In some implementations, the method involves dividing an input audio stream into chunks, using a machine-learning based detection model with an encoder and classifier to analyze each chunk for policy-violating content, and modifying the audio to mute or replace the offending segments with different audio. In some implementations, the detection model is trained using supervised learning with training sets that include detailed labels for policy-violating content.

Technical advantages of one or more described features can include enhanced accuracy and precision in detecting policy-violating content in real-time voice chat communications. By leveraging a machine-learning based detection model that processes audio chunks in real-time, the system can identify and respond to inappropriate content with high granularity. This ensures that even partial utterances of policy-violating words are detected, providing robust protection against various forms of verbal abuse and inappropriate language.

Another technical advantage is the reduced latency in moderating real-time audio streams. The method divides the audio stream into manageable chunks and processes them through a highly efficient encoder and classifier pipeline. The use of convolutional and self-attention layers within the encoder enables quick extraction of relevant features, while the classification layer immediately determines the presence of policy-violating content. This design minimizes delays and ensures that modifications to the audio, such as muting or replacing offending segments, are applied almost instantaneously.

Another technical advantage is the ability to modify audio chunks based on the detected policy-violating content, whether by muting or replacing specific words or phrases, ensures compliance with community standards without significantly disrupting the flow of conversation. The precise control over audio modification allows for selective muting or replacing, targeting only the offending content while preserving the overall context and continuity of the audio stream.

Another technical advantage is the flexibility of the detection model to handle both binary and multi-class classifications allows it to adapt to different policy requirements and content moderation needs. Platforms can customize the model to detect specific categories of policy violations, such as hate speech, profanity, and harassment, providing tailored solutions that align with their community standards and regulatory obligations. This adaptability makes the invention suitable for a wide range of applications, from gaming and social media to professional communication platforms.

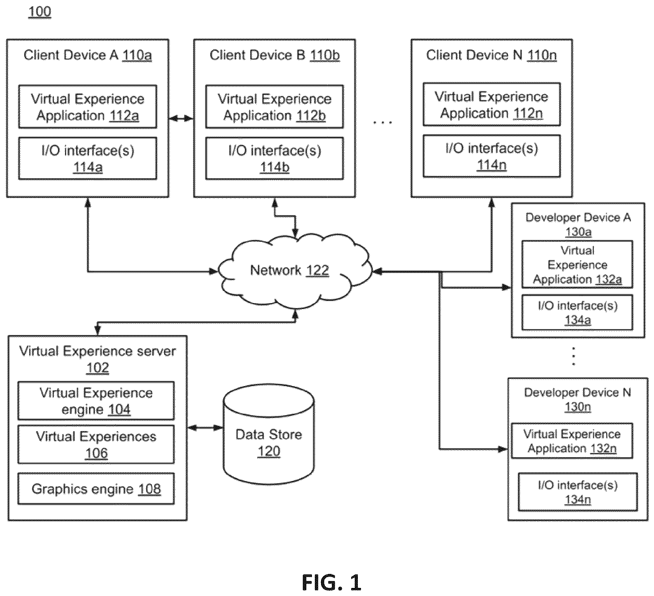

FIG. 1 is a diagram of an example system architecture that can be used to provide real-time replacement of policy-violating content within voice chat communication, in accordance with some implementations. FIG. 1 and the other figures use like reference numerals to identify similar elements. A letter after a reference numeral, such as "110," indicates that the text refers specifically to the element having that particular reference numeral. A reference numeral in the text without a following letter, such as "110," refers to any or all of the elements in the figures bearing that reference numeral (e.g. "110" in the text refers to reference numerals "110a," "110b," and/or "110n" in the figures).

The system architecture 100 (also referred to as "system" herein) includes online virtual experience server 102, data store 120, client devices 110a, 110b, and 110n (generally referred to as "client device(s) 110" herein), and developer devices 130a and 130n (generally referred to as "developer device(s) 130" herein). Virtual experience server 102, data store 120, client devices 110, and developer devices 130 are coupled via network 122. In some implementations, client devices(s) 110 and developer device(s) 130 may refer to the same or same type of device.

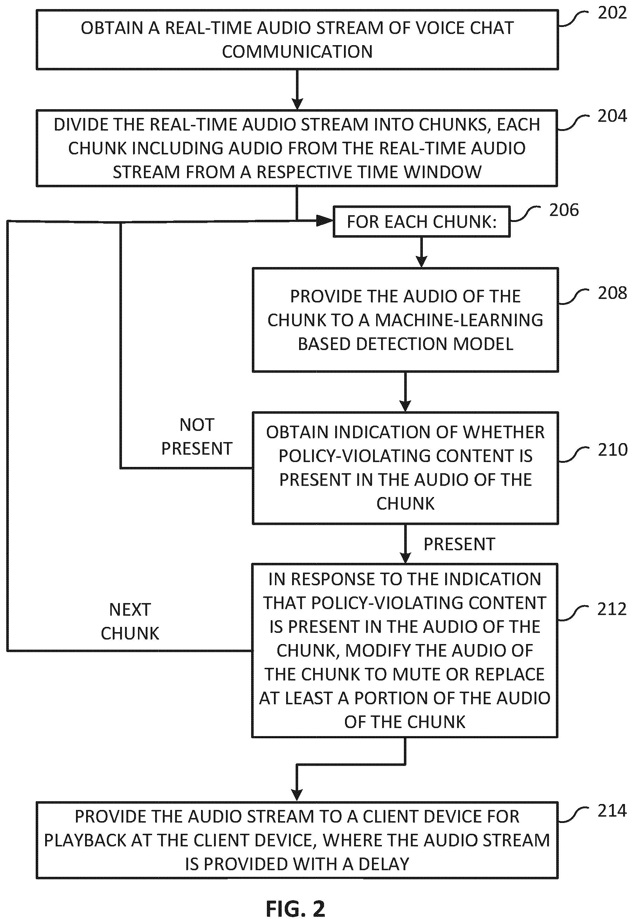

Online virtual experience server 102 can include, among other things, a virtual experience engine 104, one or more virtual experiences 106, and graphics engine 108. In some implementations, the graphics engine 108 may be a system, application, or module that permits the online virtual experience server 102 to provide graphics and animation capability. In some implementations, the graphics engine 108 may perform one or more of the operations described below in connection with the flowchart shown in Fig. 2. In one or more additional or alternative implementations, the operations described below may be performed on one or more client devices 110, or one or more developer devices 130. In some implementations, where the operations are performed depends at least in part on compute resources, e.g., memory, processing power, or disk space. A client device 110 can include a virtual experience application 112, and input/output (I/O) interfaces 114 (e.g., input/output devices). The input/output devices can include one or more of a microphone, speakers, headphones, display device, mouse, keyboard, game controller, touchscreen, virtual reality consoles, etc.

A developer device 130 can include a virtual experience application 132, and input/output (I/O) interfaces 134 (e.g., input/output devices). The input/output devices can include one or more of a microphone, speakers, headphones, display device, mouse, keyboard, game controller, touchscreen, virtual reality consoles, etc.

System architecture 100 is provided for illustration. In different implementations, the system architecture 100 may include the same, fewer, more, or different elements configured in the same or different manner as that shown in FIG. 1.

In some implementations, network 122 may include a public network (e.g., the Internet), a private network (e.g., a local area network (LAN) or wide area network (WAN)), a wired network (e.g., Ethernet network), a wireless network (e.g., an 802.11 network, a Wi-Fi^{®} network, or wireless LAN (WLAN)), a cellular network (e.g., a 5G network, a Long Term Evolution (LTE) network, etc.), routers, hubs, switches, server computers, or a combination thereof.

In some implementations, the data store 120 may be a non-transitory computer readable memory (e.g., random access memory), a cache, a drive (e.g., a hard drive), a flash drive, a database system, or another type of component or device capable of storing data. The data store 120 may also include multiple storage components (e.g., multiple drives or multiple databases) that may also span multiple computing devices (e.g., multiple server computers). In some implementations, data store 120 may include cloud-based storage.

In some implementations, the online virtual experience server 102 can include a server having one or more computing devices (e.g., a cloud computing system, a rackmount server, a server computer, cluster of physical servers, etc.). In some implementations, the online virtual experience server 102 may be an independent system, may include multiple servers, or be part of another system or server.

In some implementations, the online virtual experience server 102 may include one or more computing devices (such as a rackmount server, a router computer, a server computer, a personal computer, a mainframe computer, a laptop computer, a tablet computer, a desktop computer, etc.), data stores (e.g., hard disks, memories, databases), networks, software components, and/or hardware components that may be used to perform operations on the online virtual experience server 102 and to provide a user with access to online virtual experience server 102. The online virtual experience server 102 may also include a website (e.g., a web page) or application back-end software that may be used to provide a user with access to content provided by online virtual experience server 102. For example, users may access online virtual experience server 102 using the virtual experience application 112 on client devices 110.

In some implementations, virtual experience session data are generated via online virtual experience server 102, virtual experience application 112, and/or virtual experience application 132, and are stored in data store 120. With permission from virtual experience participants, virtual experience session data may include associated metadata, e.g., virtual experience identifier(s); device data associated with the participant(s); demographic information of the participant(s); virtual experience session identifier(s); chat transcripts; session start time, session end time, and session duration for each participant; relative locations of participant avatar(s) within a virtual experience environment; purchase(s) within the virtual experience by one or more participants(s); accessories utilized by participants; etc.

In some implementations, online virtual experience server 102 may be a type of social network providing connections between users or a type of user-generated content system that allows users (e.g., end-users or consumers) to communicate with other users on the online virtual experience server 102, where the communication may include voice chat (e.g., synchronous and/or asynchronous voice communication), video chat (e.g., synchronous and/or asynchronous video communication), or text chat (e.g., 1:1 and/or N:N synchronous and/or asynchronous text-based communication). A record of some or all user communications may be stored in data store 120 or within virtual experiences 106. The data store 120 may be utilized to store chat transcripts (text, audio, images, etc.) exchanged between participants.

In some implementations of the disclosure, a "user" may be represented as a single individual. However, other implementations of the disclosure encompass a "user" (e.g., creating user) being an entity controlled by a set of users or an automated source. For example, a set of individual users federated as a community or group in a user-generated content system may be considered a "user."

In some implementations, online virtual experience server 102 may be or include a virtual gaming server. For example, the gaming server may provide single-player or multiplayer games to a community of users that may access a "system" herein that includes online gaming server 102, data store 120, and client device 110 and/or may interact with virtual experiences using client devices 110 via network 122. In some implementations, virtual experiences (including virtual realms or worlds, virtual games, other computer-simulated environments) may be two-dimensional (2D) virtual experiences, three-dimensional (3D) virtual experiences (e.g., 3D user-generated virtual experiences), virtual reality (VR) experiences, or augmented reality (AR) experiences, for example. In some implementations, users may participate in interactions (such as gameplay) with other users. In some implementations, a virtual experience may be experienced in real-time with other users of the virtual experience. A virtual experience may include one or more avatars (e.g., characters or character models). An avatar is a virtual object displayed in the virtual space that may be controlled by a human user, or may be a computer-controlled avatar (e.g., a nonplayer character controlled by a game or other virtual experience). In various implementations, an avatar may be a humanoid, an animal form, a vehicle form, an object form, or in any other form. In various implementations, avatar or object animation may be performed automatically by virtual experience engine 104 and/or by virtual experience applications (112).

In some implementations, virtual experience engagement may refer to the interaction of one or more participants using client devices (e.g., 110) within a virtual experience (e.g., 106) or the presentation of the interaction on a display or other output device (e.g., 114) of a client device 110. For example, virtual experience engagement may include interactions with one or more participants within a virtual experience or the presentation of the interactions on a display of a client device.

In some implementations, a virtual experience 106 can include an electronic file that can be executed or loaded using software, firmware or hardware configured to present the virtual experience content (e.g., digital media item) to an entity. In some implementations, a virtual experience application 112 may be executed and a virtual experience 106 rendered in connection with a virtual experience engine 104. In some implementations, a virtual experience 106 may have a common set of rules or common goal, and the environment of a virtual experience 106 shares the common set of rules or common goal. In some implementations, different virtual experiences may have different rules or goals from one another.

In some implementations, virtual experiences may have one or more environments (also referred to as "virtual experience environments" or "virtual environments" herein) where multiple environments may be linked. An example of a virtual environment may be a three-dimensional (3D) environment. The one or more environments of a virtual experience 106 may be collectively referred to as a "world" or "virtual experience world" or "gaming world" or "virtual world" or "virtual space" or "universe" herein. An example of a world may be a 3D world of a virtual experience 106. For example, a user may build a virtual environment that is linked to another virtual environment created by another user. An avatar (e.g., character) of the virtual experience may cross the virtual border to enter the adjacent virtual environment.

It may be noted that 3D environments or 3D worlds use graphics that use a three-dimensional representation of geometric data representative of virtual experience content (or at least present virtual experience content to appear as 3D content whether or not 3D representation of geometric data is used). 2D environments or 2D worlds use graphics that use two-dimensional representation of geometric data representative of virtual experience content.

In some implementations, the online virtual experience server 102 can host one or more virtual experiences 106 and can permit users to interact with the virtual experiences 106 using a virtual experience application 112 of client devices 110. Users of the online virtual experience server 102 may play, create, interact with, or build virtual experiences 106, communicate with other users, and/or create and build objects (e.g., also referred to as "item(s)" or "virtual experience objects" or "virtual experience item(s)" herein) of virtual experiences 106.

For example, in generating user-generated virtual items, users may create avatars, decoration for the avatars, one or more virtual environments for an interactive virtual experience, or build structures used in a virtual experience 106, among others. In some implementations, users may buy, sell, or trade virtual experience objects, such as in-platform currency (e.g., virtual currency), with other users of the online virtual experience server 102. In some implementations, online virtual experience server 102 may transmit virtual experience content to virtual experience applications (e.g., 112). In some implementations, virtual experience content (also referred to as "content" herein) may refer to any data or software instructions (e.g., virtual experience objects, virtual experience, user information, video, images, commands, media item, etc.) associated with online virtual experience server 102 or virtual experience applications. In some implementations, virtual experience objects (e.g., also referred to as "item(s)" or "objects" or "virtual objects" or "virtual experience item(s)" herein) may refer to objects that are used, created, shared or otherwise depicted in virtual experience applications 106 of the online virtual experience server 102 or virtual experience applications 112 of the client devices 110. For example, virtual experience objects may include a part, model, avatar, accessories, tools, weapons, clothing, buildings, vehicles, currency, flora, fauna, components of the aforementioned (e.g., windows of a building), and so forth.

It may be noted that the online virtual experience server 102 hosting virtual experiences 106, is provided for purposes of illustration. In some implementations, online virtual experience server 102 may host one or more media items that can include communication messages from one user to one or more other users. With user permission and express user consent, the online virtual experience server 102 may analyze chat transcripts data to improve the virtual experience platform. Media items can include, but are not limited to, digital video, digital movies, digital photos, digital music, audio content, melodies, website content, social media updates, electronic books, electronic magazines, digital newspapers, digital audio books, electronic journals, web blogs, real simple syndication (RSS) feeds, electronic comic books, software applications, etc. In some implementations, a media item may be an electronic file that can be executed or loaded using software, firmware or hardware configured to present the digital media item to an entity.

In some implementations, a virtual experience 106 may be associated with a particular user or a particular group of users (e.g., a private virtual experience), or made widely available to users with access to the online virtual experience server 102 (e.g., a public virtual experience). In some implementations, where online virtual experience server 102 associates one or more virtual experiences 106 with a specific user or group of users, online virtual experience server 102 may associate the specific user(s) with a virtual experience 106 using user account information (e.g., a user account identifier such as username and password).

In some implementations, online virtual experience server 102 or client devices 110 may include a virtual experience engine 104 or virtual experience application 112. In some implementations, virtual experience engine 104 may be used for the development or execution of virtual experiences 106. For example, virtual experience engine 104 may include a rendering engine ("renderer") for 2D, 3D, VR, or AR graphics, a physics engine, a collision detection engine (and collision response), sound engine, scripting functionality, animation engine, artificial intelligence engine, networking functionality, streaming functionality, memory management functionality, threading functionality, scene graph functionality, or video support for cinematics, among other features. The components of the virtual experience engine 104 may generate commands that help compute and render the virtual experience (e.g., rendering commands, collision commands, physics commands, etc.) In some implementations, virtual experience applications 112 of client devices 110, respectively, may work independently, in collaboration with virtual experience engine 104 of online virtual experience server 102, or a combination of both.

In some implementations, both the online virtual experience server 102 and client devices 110 may execute a virtual experience engine (104 and 112, respectively). The online virtual experience server 102 using virtual experience engine 104 may perform some or all the virtual experience engine functions (e.g., generate physics commands, rendering commands, etc.), or offload some or all the virtual experience engine functions to virtual experience engine 104 of client device 110. In some implementations, each virtual experience 106 may have a different ratio between the virtual experience engine functions that are performed on the online virtual experience server 102 and the virtual experience engine functions that are performed on the client devices 110. For example, the virtual experience engine 104 of the online virtual experience server 102 may be used to generate physics commands in cases where there is a collision between at least two virtual experience objects, while the additional virtual experience engine functionality (e.g., generate rendering commands) may be offloaded to the client device 110. In some implementations, the ratio of virtual experience engine functions performed on the online virtual experience server 102 and client device 110 may be changed (e.g., dynamically) based on virtual experience engagement conditions. For example, if the number of users engaging in a particular virtual experience 106 exceeds a threshold number, the online virtual experience server 102 may perform one or more virtual experience engine functions that were previously performed by the client devices 110.

For example, users may be playing a virtual experience 106 on client devices 110, and may send control instructions (e.g., user inputs, such as right, left, up, down, user election, or avatar position and velocity information, etc.) to the online virtual experience server 102. Subsequent to receiving control instructions from the client devices 110, the online virtual experience server 102 may send experience instructions (e.g., position and velocity information of the avatars participating in the group experience or commands, such as rendering commands, collision commands, etc.) to the client devices 110 based on control instructions. For instance, the online virtual experience server 102 may perform one or more logical operations (e.g., using virtual experience engine 104) on the control instructions to generate experience instruction(s) for the client devices 110. In other instances, online virtual experience server 102 may pass one or more or the control instructions from one client device 110 to other client devices (e.g., from client device 110a to client device 110b) participating in the virtual experience 106. The client devices 110 may use the experience instructions and render the virtual experience for presentation on the displays of client devices 110.

In some implementations, the control instructions may refer to instructions that are indicative of actions of a user's avatar within the virtual experience. For example, control instructions may include user input to control action within the experience, such as right, left, up, down, user selection, gyroscope position and orientation data, force sensor data, etc. The control instructions may include avatar position and velocity information. In some implementations, the control instructions are sent directly to the online virtual experience server 102. In other implementations, the control instructions may be sent from a client device 110 to another client device (e.g., from client device 110b to client device 110n), where the other client device generates experience instructions using the local virtual experience engine 104. The control instructions may include instructions to play a voice communication message or other sounds from another user on an audio device (e.g., speakers, headphones, etc.), for example voice communications or other sounds generated using the audio spatialization techniques as described herein.

In some implementations, experience instructions may refer to instructions that enable a client device 110 to render a virtual experience, such as a multiparticipant virtual experience. The experience instructions may include one or more of user input (e.g., control instructions), avatar position and velocity information, or commands (e.g., physics commands, rendering commands, collision commands, etc.).

In some implementations, avatars (or virtual experience objects generally) are constructed from components, one or more of which may be selected by the user, that automatically join together to aid the user in editing.

In some implementations, an avatar is implemented as a 3D model and includes a surface representation used to draw the avatar (also known as a skin or mesh) and a hierarchical set of interconnected bones (also known as a skeleton or rig). The rig may be utilized to animate the avatar and to simulate motion and action by the avatar. The 3D model may be represented as a data structure, and one or more parameters of the data structure may be modified to change various properties of the avatar, e.g., dimensions (height, width, girth, etc.); body type; movement style; number/ type of body parts; proportion (e.g., shoulder and hip ratio); head size; etc.

One or more avatar (also referred to as an "character" or "model" herein) may be associated with a user where the user may control the avatar to facilitate a user's interaction with the virtual experience 106. In some implementations, an avatar may include components such as body parts (e.g., hair, arms, legs, etc.) and accessories (e.g., t-shirt, glasses, decorative images, tools, etc.). In some implementations, body parts of avatars that are customizable include head type, body part types (arms, legs, torso, and hands), face types, hair types, and skin types, among others. In some implementations, the accessories that are customizable include clothing (e.g., shirts, pants, hats, shoes, glasses, etc.), weapons, or other tools.

In some implementations, for some asset types, e.g., shirts, pants, etc. the online virtual experience platform may provide users access to simplified 3D virtual object models that are represented by a mesh of a low polygon count, e.g., between about 20 and about 30 polygons.

In some implementations, the user may also control the scale (e.g., height, width, or depth) of an avatar or the scale of components of an avatar. In some implementations, the user may control the proportions of an avatar (e.g., blocky, anatomical, etc.). It may be noted that is some implementations, an avatar may not include an avatar virtual experience object (e.g., body parts, etc.) but the user may control the avatar (without the avatar virtual experience object) to facilitate the user's interaction with the virtual experience (e.g., a puzzle game where there is no rendered avatar game object, but the user still controls an avatar to control in-game action).

In some implementations, a component, such as a body part, may be a primitive geometrical shape such as a block, a cylinder, a sphere, etc., or some other primitive shape such as a wedge, a torus, a tube, a channel, etc. In some implementations, a creator module may publish a user's avatar for view or use by other users of the online virtual experience server 102. In some implementations, creating, modifying, or customizing avatars, other virtual experience objects, virtual experiences 106, or virtual experience environments may be performed by a user using a I/O interface (e.g., developer interface) and with or without scripting (or with or without an application programming interface (API)). It may be noted that for purposes of illustration, avatars are described as having a humanoid form. It may further be noted that avatars may have any form such as a vehicle, animal, animate or inanimate object, or other creative form.

In some implementations, the online virtual experience server 102 may store avatars created by users in the data store 120. In some implementations, the online virtual experience server 102 maintains an avatar catalog and virtual experience catalog that may be presented to users. In some implementations, the virtual experience catalog includes images of virtual experiences stored on the online virtual experience server 102. In addition, a user may select an avatar (e.g., an avatar created by the user or other user) from the avatar catalog to participate in the chosen virtual experience. The character catalog includes images of avatars stored on the online virtual experience server 102. In some implementations, one or more of the avatars in the avatar catalog may have been created or customized by the user. In some implementations, the chosen avatar may have avatar settings defining one or more of the components of the avatar.

In some implementations, a user's avatar can include a configuration of components, where the configuration and appearance of components and more generally the appearance of the avatar may be defined by avatar settings. In some implementations, the avatar settings of a user's avatar may at least in part be chosen by the user. In other implementations, a user may choose an avatar with default avatar settings or avatar setting chosen by other users. For example, a user may choose a default avatar from an avatar catalog that has predefined avatar settings, and the user may further customize the default avatar by changing some of the avatar settings (e.g., adding a shirt with a customized logo). The avatar settings may be associated with a particular avatar by the online virtual experience server 102.

In some implementations, the client device(s) 110 may each include computing devices such as personal computers (PCs), mobile devices (e.g., laptops, mobile phones, smart phones, tablet computers, or netbook computers), network-connected televisions, gaming consoles, etc. In some implementations, a client device 110 may also be referred to as a "user device." In some implementations, one or more client devices 110 may connect to the online virtual experience server 102 at any given moment. It may be noted that the number of client devices 110 is provided as illustration. In some implementations, any number of client devices 110 may be used.

In some implementations, each client device 110 may include an instance of the virtual experience application 112, respectively. In one implementation, the virtual experience application 112 may permit users to use and interact with online virtual experience server 102, such as control an avatar (virtual character) in a virtual experience hosted by online virtual experience server 102, or view or upload content, such as virtual experiences 106, images, video items, web pages, documents, and so forth. In one example, the virtual experience application may be a web application (e.g., an application that operates in conjunction with a web browser) that can access, retrieve, present, or navigate content (e.g., avatar in a virtual environment, etc.) served by a web server. In another example, the virtual experience application may be a native application (e.g., a mobile application, app, virtual experience program, or a gaming program) that is installed and executes local to client device 110 and allows users to interact with online virtual experience server 102. The virtual experience application may render, display, or present the content (e.g., a web page, a media viewer) to a user. In an implementation, the virtual experience application may also include an embedded media player (e.g., a Flash^{®} or HTML5 player) that is embedded in a web page.

According to aspects of the disclosure, the virtual experience application may be an online virtual experience server application for users to build, create, edit, upload content to the online virtual experience server 102 as well as interact with online virtual experience server 102 (e.g., engage in virtual experiences 106 hosted by online virtual experience server 102). As such, the virtual experience application may be provided to the client device(s) 110 by the online virtual experience server 102. In another example, the virtual experience application may be an application that is downloaded from a server.

In some implementations, each developer device 130 may include an instance of the virtual experience application 132, respectively. In one implementation, the virtual experience application 132 may permit a developer user(s) to use and interact with online virtual experience server 102, such as control an avatar in a virtual experience hosted by online virtual experience server 102, or view or upload content, such as virtual experiences 106, images, video items, web pages, documents, and so forth. In one example, the virtual experience application may be a web application (e.g., an application that operates in conjunction with a web browser) that can access, retrieve, present, or navigate content (e.g., avatar in a virtual environment, etc.) served by a web server. In another example, the virtual experience application may be a native application (e.g., a mobile application, app, virtual experience program, or a gaming program) that is installed and executes local to client device 130 and allows users to interact with online virtual experience server 102. The virtual experience application may render, display, or present the content (e.g., a web page, a media viewer) to a user. In an implementation, the virtual experience application may also include an embedded media player (e.g., a Flash^{®} or HTML5 player) that is embedded in a web page.

According to aspects of the disclosure, the virtual experience application 132 may be an online virtual experience server application for users to build, create, edit, upload content to the online virtual experience server 102 as well as interact with online virtual experience server 102 (e.g., provide and/or engage in virtual experiences 106 hosted by online virtual experience server 102). As such, the virtual experience application may be provided to the client device(s) 130 by the online virtual experience server 102. In another example, the virtual experience application 132 may be an application that is downloaded from a server. Virtual experience application 132 may be configured to interact with online virtual experience server 102 and obtain access to user credentials, user currency, etc. for one or more virtual experiences 106 developed, hosted, or provided by a virtual experience developer.

In some implementations, a user may login to online virtual experience server 102 via the virtual experience application. The user may access a user account by providing user account information (e.g., username and password) where the user account is associated with one or more avatars available to participate in one or more virtual experiences 106 of online virtual experience server 102. In some implementations, with appropriate credentials, a virtual experience developer may obtain access to virtual experience virtual objects, such as in-platform currency (e.g., virtual currency), avatars, special powers, accessories, which are owned by or associated with other users.

In general, functions described in one implementation as being performed by the online virtual experience server 102 can also be performed by the client device(s) 110, or a server, in other implementations if appropriate. In addition, the functionality attributed to a particular component can be performed by different or multiple components operating together. The online virtual experience server 102 can also be accessed as a service provided to other systems or devices through suitable application programming interfaces (hereinafter "APIs"), and thus is not limited to use in websites.

FIG. 2 illustrates a method of providing real-time replacement of policy-violating content within voice chat communication, in accordance with some implementations. In various embodiments, the blocks shown in FIG. 2 and described below may be performed by any of the elements illustrated in FIG. 1.

At block 202, a real-time audio stream of voice chat communication is obtained. A real-time audio stream of voice chat communication, in this context, specifically pertains to an ongoing, live transmission of spoken conversations between users over an online platform or application. This audio stream captures the spoken words and audio signals exchanged in real time, reflecting the immediate interactions and conversations between participants.

In some embodiments, the real-time audio stream is acquired by receiving the audio data directly from the users engaged in the voice chat session. This reception can occur through network connections established between the users' devices and the central server or platform managing the voice chat service. In some embodiments, the audio stream may be obtained through peer-to-peer (P2P) connections between participants, such as, e.g., in decentralized or distributed voice chat systems. For example, with respect to Fig. 1, the connections can be between two or more client devices 110 of Fig. 1 via network 122, and/or between client devices via network 122 and server 102. In some embodiments, the process involves capturing the audio data at the source points where conversations originate, ensuring that the stream remains synchronized with the ongoing dialogue among users. In some embodiments, each participant's device acts as both a sender and receiver of audio data, establishing direct connections to exchange voice chat streams.

In some embodiments with a centralized voice chat platform, the audio stream may be obtained through server-client architectures where users' audio data is transmitted to and aggregated by a central server. For example, a centralized voice chat platform can be used where users join virtual rooms to engage in real-time conversations. As participants speak, their voices are captured by their devices' microphones, encoded into digital audio data, and transmitted over the network to the platform's servers. The servers then aggregate these streams. For example, in some implementations, a centralized communication (e.g., voice chat) platform can be implemented in virtual experience server 102 of Fig. 1.

In some embodiments, pre-processing is performed upon obtaining the real-time audio stream. In some embodiments, background noise is removed from the stream. Noise reduction techniques can be utilized to isolate the primary speech signals, thereby improving the accuracy of subsequent analysis by minimizing interference from ambient sounds or environmental disturbances. In some embodiments, the audio stream is converted into a particular digital format suitable for analysis. In some embodiments, this conversion ensures compatibility with the subsequent stages of the model, facilitating efficient data handling and processing. By standardizing the audio data into a digital format, the method enables integration with various machine learning algorithms and models used for detecting policy-violating content in real-time voice chat scenarios. In some embodiments, Mel-Frequency Cepstral Coefficients (MFCCs) are extracted from the audio stream. MFCCs are widely recognized as effective features for capturing the spectral characteristics of speech signals, and encoding essential information related to the frequency distribution and temporal dynamics of the audio. By extracting MFCCs, the model's ability to discern subtle variations in speech patterns and acoustic cues is improved. In some embodiments, one or more of the pre-processing steps are executed by a dedicated pre-processing layer integrated within a detection model architecture, which will be described in further detail below. This pre-processing layer serves as an initial stage in the computational pipeline, tasked specifically with preparing the incoming audio stream for subsequent analysis and moderation tasks. Block 202 may be followed by Block 204.

At block 204, the real-time audio stream is divided into chunks. Each chunk includes audio from the real-time audio stream, from a respective time window. A "chunk", as used herein, refers to a discrete segment of the audio stream, typically represented as a short-duration snippet of audio data extracted from the continuous stream. The size of each chunk may vary depending on the application's requirements and is defined by the duration of the respective time window from which the audio is sampled.

In some embodiments, the real-time audio stream is divided the real-time into fixed-duration chunks. For example, the real-time audio stream may be divided into fixed-duration chunks of, e.g., 100 milliseconds or 500 milliseconds each. In some embodiments, each chunk corresponds to a brief segment of conversation, such that discrete units of audio data are captured which reflect natural pauses or breaks in speech patterns during real-time interactions.

In some embodiments, adaptive chunking is utilized, where the size of each chunk dynamically adjusts based on one or more contextual factors such as, for example, speech cadence, pauses in conversation, or fluctuations in audio intensity. For example, during periods of rapid speech, chunks may be smaller to capture more granular details of the conversation, while longer chunks might be used during pauses or periods of silence.

For example, consider a centralized voice chat platform where users engage in real-time conversations. As participants speak, the platform continuously captures the audio stream and segments it into 200-millisecond chunks. Each chunk represents a distinct time window, enabling the system to process manageable units of audio data for content moderation purposes.

In another example, a decentralized voice chat application employs a variable chunking strategy based on speech detection algorithms. Here, the application dynamically adjusts chunk sizes based on speech dynamics and environmental noise levels to maintain optimal performance and accuracy. For example, during noisy environments or fast-paced discussions (e.g., noise or spoken word frequency above particular thresholds, etc.), smaller chunks of 50 milliseconds may be utilized to capture rapid speech patterns effectively. Conversely, in quieter settings or slower conversations, larger chunks of 500 milliseconds may be employed to balance computational load and real-time responsiveness. Block 204 may be followed by block 206.

At block 206, for each of the chunks of the real-time audio stream that were generated at block 204, a series of operations are performed. For each chunk, those operations to be performed may include one or more of the operations at block 208, block 210, and block 212. Block 214 may be performed concurrently to any of block 206, block 208, block 210, and/or block 212. Block 206 may be followed by block 208.

At block 208, the audio of the chunk is provided to a machine-learning based detection model. A "machine-learning based detection model" in this context refers to a computational model trained using machine learning techniques to recognize and classify specific patterns or features within audio data. In various embodiments, this model leverages algorithms such as, e.g., neural networks, support vector machines, or decision trees. In some embodiments, such algorithms are trained on labeled datasets to learn to distinguish between different types of audio content, such as normal speech and policy-violating language.

In various embodiments, the machine-learning based detection model may employ a variety of architectures tailored to the task of audio classification. For instance, in some embodiments, the detection model can utilize convolutional neural networks (CNNs) designed to extract relevant features from spectrograms or Mel-Frequency Cepstral Coefficients (MFCCs) of the audio chunks. These networks can efficiently capture local patterns in the audio data.

In some embodiments, recurrent neural networks (RNNs) are utilized by the machine learning-based detection model. Such RNNs may be equipped with, for example, long short-term memory (LSTM) units or gated recurrent units (GRUs), which may be used for modeling sequential data over time. This architecture enables the detection model to detect temporal dependencies within the audio chunks, detect the context in which certain words or phrases are spoken, and make more accurate predictions about the presence of policy-violating content.

In some embodiments, a transformer-based model with self-attention mechanisms can be employed, allowing the detection model to capture long-range dependencies across the audio sequence. Such models can be utilized for understanding relationships between different parts of the audio data, and potentially even across time spans that are longer than the individual different parts. In some embodiments, the machine-learning based detection model is trained on a diverse dataset that encompasses a wide range of, e.g., speech patterns, accents, and environmental conditions to ensure robustness and generalizability. Block 208 may be followed by block 210.

At block 210, indication is obtained of whether policy-violating content is present in the audio of the chunk. If indication is obtained that policy-violating content is not present, then block 210 is followed by block 206, where the next chunk in the set of chunks of the real-time audio stream is selected. If no chunks are remaining to be selected, then block 206 is followed by block 214. If, however, indication is obtained that policy-violating content is present in the audio of the chunk, then block 210 is followed by block 212.

"Policy-violating content", as used herein, refers to any speech that contravenes predefined guidelines or regulations, such as, for example, explicit language, hate speech, personally identifiable information (PII), or other restricted content based on community standards or legal requirements of the voice communication platform.

The detection model can include two main components: an encoder and a classifier. The encoder's role is to transform the audio data from the chunk into a feature vector representation. This transformation is performed to extract meaningful features from the audio that can then be analyzed and processed further by subsequent components of the detection model.

In some embodiments, the encoder in this context employs techniques from signal processing and machine learning to convert the raw audio waveform into a compressed and abstract representation. For instance, it may utilize Mel-Frequency Cepstral Coefficients (MFCCs), which capture spectral characteristics of the audio over short time windows. In various embodiments, other techniques such as Short-Time Fourier Transform (STFT) or Wavelet Transform may be utilized. Such transformations may enable capturing of temporal and frequency-domain features that can be used to identify nuances in speech, including language context and emotional tone. In some embodiments, the encoder is a pre-trained encoder from an ASR model that includes the encoder and a separate decoder that is trained to decode the feature vector into text.

In some embodiments, once the audio chunk is encoded into a feature vector, it is passed on to the classifier within the detection model. The classifier's primary function is to analyze the feature vector and make a determination regarding the presence of policy-violating content. This classification task can be performed using machine learning algorithms such as Support Vector Machines (SVM), Random Forests, or more advanced deep learning models like CNNs or RNNs. In various embodiments, the specific type of classifier that is utilized depends on factors such as the complexity of the audio data, the desired accuracy, and real-time processing requirements.

In some embodiments, the classifier generates the indication as one of: policy-violating content is present in the audio of the chunk, or policy-violating content is absent from the audio of the chunk. In some embodiments, the classifier generates the indication as a category for the audio of the chunk, where the category is one of: non-policy violating content, or policy-violating content that is one of: hate speech, swearing, inappropriate behavior, spam, harassment, or any other content types deemed inappropriate according to platform policies and/or community guidelines.

In some embodiments, the encoder and classifier work in tandem to achieve real-time content moderation in voice chat applications. For instance, in a social media platform's live streaming service, the encoder may transform incoming audio segments into feature vectors, capturing speech patterns and contextual cues. The classifier then analyzes these vectors to detect any instances of policy-violating content such as hate speech or explicit language.

In another example, a multiplayer game is maintained within a virtual environment. In an example scenario where players engage in voice chat during gameplay sessions, the encoder component of the detection model continuously processes the real-time audio streams generated by each player, converting them into feature vectors that encapsulate the unique speech patterns, intonations, and frequencies of each participant's voice. Once encoded, these feature vectors are passed to the classifier, which is trained to detect various forms of policy-violating content, such as hate speech, profanity, or other disruptive language. For example, if a player uses derogatory language or engages in abusive speech during the game, the classifier analyzes the feature vector and promptly identifies the presence of such content. Upon detection, the game's moderation system then may take immediate action, such as muting the offending player's audio stream or issuing warnings.

In some embodiments, the indication of policy-violating content can be adaptive and context-aware. Different factors may be considered such as, for example, user preferences (e.g., adjustable sensitivity settings for content filtering), real-time feedback (e.g., user reports or moderator interventions), or dynamic updates to policy guidelines.

In some embodiments, the feature vector represents speech characteristics of the audio of the chunk, and the encoder includes one or more convolutional layers that extract local features from the audio of the chunk. In some embodiments, each convolutional layer employs multiple filters that capture patterns and features of the audio within short temporal windows. These filters enable the encoder to extract details such as, for example, pitch variations, phonetic elements, and other acoustic attributes that define the speech content of the chunk.

In some embodiments, the utilization of convolutional layers within the encoder enhances the model's capability to process and interpret complex auditory inputs in real-time. By applying convolutional filters across successive time steps of the audio chunk, the encoder systematically extracts relevant features that contribute to constructing a comprehensive feature vector.

One example involves a live-streaming platform where content moderation is performed. As users engage in real-time voice communication, the encoder's convolutional layers continuously operate to analyze ongoing audio streams. Suppose a user utters a phrase containing inappropriate language during a broadcast. In that case, the convolutional layers swiftly capture distinctive acoustic patterns associated with the offending speech, thereby facilitating prompt detection and subsequent action by the moderation system to address the policy violation.

In some embodiments, the encoder of the computer-implemented method includes one or more self-attention layers. These self-attention layers are designed to integrate context from preceding audio chunks into their operations. Unlike convolutional layers that focus on local patterns within short time frames, self-attention layers enable the model to consider broader temporal dependencies and contextual information spanning multiple chunks of audio data. In some embodiments, within the encoder architecture, each self-attention layer attends to relevant features and relationships across different segments of the audio stream. By incorporating context from prior chunks, these layers facilitate a contextual awareness of the ongoing conversation or dialogue. In various embodiments, this contextual awareness allows the model to discern changes in, e.g., speech patterns, intonation, and semantic context over time.

In various embodiments, the inclusion of self-attention layers with contextual awareness may be utilized in scenarios where continuous and uninterrupted voice communication occurs, such as, for example, virtual meetings or online multiplayer games. For instance, during a multiplayer gaming session, players engage in dynamic exchanges that may include rapid dialogue and varying levels of emotional intensity. The self-attention layers within the encoder effectively track and analyze these fluctuations by leveraging contextual cues from previous audio chunks. This capability enables the moderation system to promptly detect and respond to instances of inappropriate language or behavior.

In some embodiments, the detection model is trained to detect whether an input audio chunk includes one or more words from a predefined vocabulary, and the indication that policy-violating content is present in the audio of the chunk is generated when the chunk is determined to include at least one word from the predefined vocabulary. In various embodiments, the predefined vocabulary can include words, phrases, or patterns of speech that have been identified as containing policy-violating content such as hate speech, swearing, derogatory language, or other prohibited terms. During operation, when the system receives an input audio chunk from a real-time voice chat communication, the detection model processes the audio to analyze its contents. In various embodiments, the detection model identifies and extracts linguistic features from the audio chunk. These features are then compared against the predefined vocabulary of policy-violating terms. If the detection model detects the presence of one or more words from the predefined vocabulary within the audio chunk, it generates an indication that policy-violating content is present. For example, if the audio chunk contains a word flagged in the predefined vocabulary as hate speech or profanity, the detection model promptly identifies this violation. The system then proceeds to modify the audio chunk by muting the specific word or replacing it with a neutral alternative, ensuring that the conversation remains compliant with platform guidelines and community standards.

In some embodiments, when the indication is that policy-violating content is present in the audio of the chunk, the detection model further outputs a time-span within the chunk that corresponds to the policy-violating content, where the portion of the audio of the chunk is from within the time-span. The time-span indicates the duration or temporal extent over which the policy-violating content persists within the audio segment. In some embodiments, when the detection model generates an indication that policy-violating content is present, it includes metadata specifying the start and end times or duration of the identified violation within the audio chunk. This time-span information provides granularity and context about when the policy-violating content was spoken or occurred during the conversation. For example, if the detection model identifies a segment within the audio chunk where hate speech or profanity occurs between the 30th and 35th seconds, the system outputs this time-span information.

At block 212, in response to the indication at block 210 that policy-violating content is present in the audio of the chunk, the audio of the chunk is modified to mute and/or replace at least a portion of the audio of the chunk with different audio. In some embodiments, block 212 may be followed by block 214, or block 214 may be performed concurrently to block 212. If a next chunk exists in the set of chunks of the audio stream, then block 212 is followed by block 206, with the next chunk being processed at block 208. In some embodiments, the next chunk is applied at block 206 subsequently to block 214 being performed.

In some embodiments, the system employs an audio processing pipeline that dynamically alters the audio stream in real-time. For example, when policy-violating content is detected, the system initiates a muting mechanism where the identified segment of audio is silenced. In some embodiments, this can include cutting out the offending words or phrases entirely, ensuring they are not audible to other participants or listeners. For instance, in a voice chat scenario, if explicit language is detected, the system can mute the specific words or replace them with a "beep" or similar audio-based interjection to obscure offensive content.

In some embodiments, real-time audio replacement techniques are utilized. Instead of muting, the system can overlay the detected policy-violating content with suitable alternative audio. For example, if a swear word is detected, it might be replaced with a neutral term or a predefined beep sound. In some embodiments, implementation may include a library of prerecorded audio snippets or synthesized speech.

In some embodiments, the modification process can be adaptive, considering contextual cues and user preferences. For instance, the system may allow customizable settings where users can choose the extent of the action to be performed (e.g., full muting vs. partial muting), or the type of replacement audio (e.g., different beep sounds or alternative phrases). In some embodiments, buffering and latency management techniques may be employed. By buffering a small segment of audio ahead of real-time transmission, the system gains a brief window to process and modify content without introducing noticeable delays in the output of the speech to receiving devices.

In some embodiments, modifying the audio of the chunk to mute or replace the policy-violating content with different audio is based on a category associated with the indication, such as, e.g., hate speech, swearing, inappropriate behavior, spam, harassment, or any other content types deemed inappropriate according to platform policies and community guidelines. The modification process includes muting or replacing the detected policy-violating content in a manner that is associated with the identified category. For instance, if the classifier determines that the audio chunk contains hate speech, the system may mute the offending segment entirely or replace it with a neutral sound. Similarly, for instances of swearing or inappropriate behavior, the system may apply audio filters to mask the offensive content without disrupting the overall conversation. In some embodiments, the decision-making process for how to modify the audio is guided by predefined rules and configurations specific to each category of policy-violating content. For example, depending on the severity and type of violation, the system may prioritize complete muting of the audio chunk or apply less intrusive measures like partial muting or audio replacement with alternative sounds.

At block 214, the audio stream is provided to a client device for playback at the client device. In various embodiments, the client device could be any device capable of receiving and playing audio streams, such as, for example, a smartphone, computer, or specialized voice communication hardware.

In various embodiments, the delivery of the audio stream to the client device may include adding a delay. This delay serves several purposes, primarily to allow for additional processing time for real-time content moderation. For example, if the system detects policy-violating content at block 210 and subsequently modifies the audio at block 212, introducing a delay ensures that the modified audio reaches the client device after the offending content has been appropriately handled. This delay can range from milliseconds to seconds, depending on the system's configuration and the specific requirements of content moderation policies.

In some embodiments, the policy-violating content may be a word, and the portion of the audio of the chunk is an entire time-span which indicates the duration over which policy-violating content persists within the audio chunk. The delay that is introduced is generated to be greater than or equal to the time-span and an inference time of the detection model for processing the chunk. Thus, the entire time-span containing the policy-violating word is considered for modification. In some embodiments, the policy-violating content is a word, and the portion of the audio of the chunk is a portion within the time-span that corresponds to a last syllable of the word, where the delay is greater than or equal to the portion of the time-span and an inference time of the detection model for processing the chunk. Thus, when the detection model identifies policy-violating content within an audio chunk, specifically a word that violates predefined standards or guidelines, the portion of the audio to be modified includes only the time-span corresponding to the last syllable of that word.

In some embodiments, buffer management techniques may be applied, where the system temporarily stores the modified audio before delivering it to client devices. By buffering the audio stream, the system can mitigate network latency and ensure smooth playback without interruptions. This buffering mechanism also supports the introduction of a delay, as it provides a window for processing and modifying audio in accordance with policy violations detected in real-time.

For example, in a voice chat application used in a professional setting where strict language policies are enforced, the system can introduce a brief delay to allow for the muting or replacement of inappropriate language. Similarly, in a gaming environment where users communicate via voice chat, a slight delay can be introduced to filter out profanity or offensive remarks, maintaining a positive and inclusive gaming experience for all players.

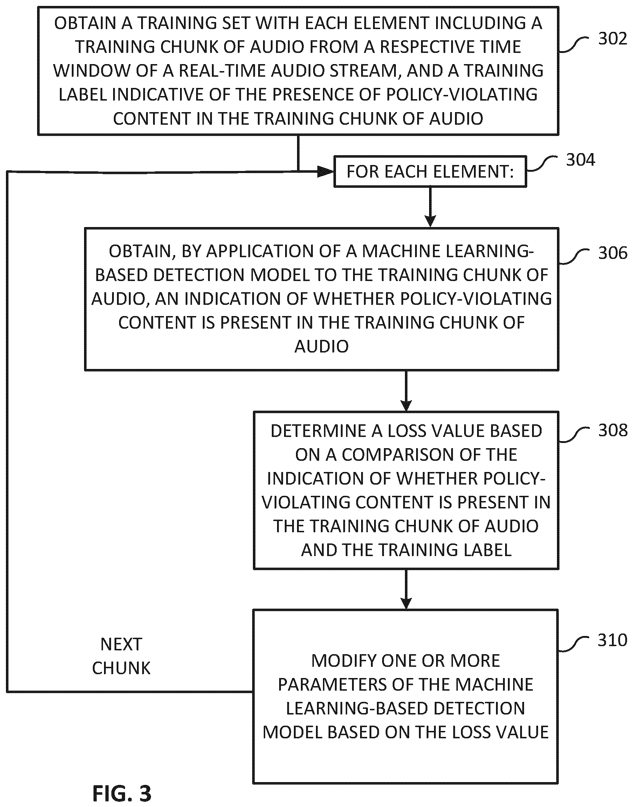

FIG. 3 is a flow diagram illustrating a method of training a machine learning-based detection model to provide real-time replacement of policy-violating content within voice chat communication, in accordance with some implementations. In various embodiments, the blocks shown in FIG. 3 and described below may be performed by any of the elements illustrated in FIG. 1.

At block 302, a training set is obtained. Each element of the training set includes a training chunk of audio (i.e., audio data) from a respective time window of a real-time audio stream. Each element of the training set further includes a training label indicative of the presence of policy-violating content in the chunk of audio. The training set is a foundational component in supervised learning scenarios. In various embodiments, the training set typically includes a diverse collection of elements, carefully curated to encompass various instances and types of audio content that the detection model needs to learn to classify accurately. The training chunks of audio are segments extracted from the continuous stream of real-time audio, each representing a discrete portion of speech captured within a specific time window. These chunks are typically standardized to a certain length or format to provide consistency during model training and evaluation.

In some embodiments, the training label associated with each training chunk serves as ground truth information for the machine-learning algorithm during training. It provides binary or categorical information indicating whether policy-violating content, such as offensive language or inappropriate speech, is present in the corresponding training chunk. For example, in a multiplayer online game environment, the training set can be constructed by recording and labeling audio segments from actual gameplay sessions where users engage in voice chat. In this example, each training chunk can correspond to a 5-second segment of speech, extracted every 10 seconds from the ongoing audio stream. The training labels indicate whether each chunk contains policy-violating content based on predefined criteria set by the game's community guidelines. This training set can be used to train a detection model to recognize and categorize similar instances of policy-violating speech in real-time during gameplay.

In some embodiments, the training process for the machine learning-based detection model is enhanced by incorporating detailed training labels for each element within the training set. The training label can include two pieces of information: the identity of a policy-violating word or phrase that is at least partially present within the audio chunk, and the precise time span during which this word or phrase occurs within the real-time audio stream. The time span indicates the start and end times or duration of the policy-violating content, enabling the model to learn the temporal context in which violations typically occur. During the training process, this detailed labeling allows the machine learning-based detection model to associate specific acoustic patterns and features with policy-violating content. The encoder processes each training chunk to extract feature vectors, while the classifier learns to map these vectors to the corresponding training labels. By incorporating the time span information, the model not only learns to identify the presence of violating content but also understands the temporal dynamics of how such content is distributed within the audio stream.

For example, consider a training set element where the audio chunk contains a phrase like "I hate you," with "hate" being the policy-violating word. The training label for this chunk can specify that the word "hate" is the violating content and provide the time span during which "hate" occurs within the audio. The model is trained to generate indications of policy-violating content based on this information, learning to recognize similar patterns and time spans in future audio streams.

In some embodiments, the training process for the machine-learning based detection model is further refined by incorporating granular training labels for each element within the training set. These labels focus not only on entire words or phrases, but specifically on the phonemes that constitute these words or phrases. Each element of the training set includes a training chunk of audio and a corresponding training label. The training label in this context provides detailed information about the phonemes that form part of a policy-violating word or phrase within the audio chunk. Specifically, the label identifies each spoken phoneme of the policy-violating content and the exact time span during which each phoneme occurs within the word or phrase. This granular labeling allows the model to learn the specific acoustic characteristics of phonemes that are indicative of policy violations. During the training process, the detection model processes each training chunk by first converting the audio into feature vectors through the encoder. The classifier then learns to associate these feature vectors with the corresponding training labels that specify the phonemes and their time spans.

In an example training set element, an audio chunk contains the word "hate" identified as policy-violating. The training label specifies the phonemes /h/, /e 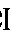 /, and /t/ along with their respective time spans within the audio chunk. The model is trained to recognize these phonemes and their sequential pattern, learning to detect the presence of policy-violating content even if only a part of the word is spoken.

At block 304, the machine-learning based detection model is trained via supervised learning, where the training includes a number of operations to be performed for each element in the training set. Operations from block 306, block 308, and block 310 are performed for each of the elements in the training set.

At block 306, for the element of the training set referred to in block 304, an indication is obtained, by application of a machine-learning based detection model to the training chunk of audio, an indication of whether policy-violating content is present in the training chunk of audio. The machine-learning based detection model includes an encoder that encodes the training chunk of audio into a feature vector, and a classifier that generates the indication of whether policy-violating content is present in the training chunk of audio based on the feature vector.

In some embodiments, the encoder within the detection model first operates on the training chunk of audio. The encoder converts the raw audio waveform into a feature vector that encapsulates important speech characteristics relevant to identifying policy violations. This process involves extracting acoustic features such as, e.g., MFCCs, which capture the spectral envelope of the audio signal, and other time-domain or frequency-domain representations that encode the audio's temporal and spectral patterns.

In some embodiments, once the encoder generates the feature vector, it serves as the input to the classifier component of the detection model. The classifier is responsible for analyzing the feature vector and making a binary decision regarding the presence of policy-violating content in the training chunk of audio. Leveraging its learned parameters and internal architecture, which may include convolutional layers for local feature extraction and self-attention mechanisms for capturing long-range dependencies, the classifier assesses whether the audio segment contains language or sounds that violate predefined community standards or policies.

The output of this process is the indication of whether policy-violating content is present in the training chunk of audio. In some embodiments, this indication is important for the supervised learning of described techniques, as it serves as the ground truth against which the model's predictions are evaluated and refined during training. By comparing the classifier's output with the actual label associated with the training chunk, the model learns to improve its accuracy over successive training iterations. This iterative process of feeding audio chunks, obtaining indications, and updating model parameters through backpropagation ensures that the machine-learning based detection model becomes increasingly adept at identifying and mitigating policy violations in real-time voice chat environments.

For example, in an online gaming platform, the training set can include audio snippets extracted from live multiplayer sessions, where each snippet is labeled based on whether it contains offensive language or inappropriate content. During training (block 304), each training chunk undergoes the process described in block 306, where the detection model's encoder extracts meaningful features and the classifier determines the presence of policy-violating content.

At block 308, a loss value is determined based on a comparison of the indication of whether policy-violating content is present in the training chunk of audio and the training label. The loss value serves as a measure of how well the machine learning model performs in comparison to the ground truth provided by the training labels. In some embodiments, the calculation of the loss value involves comparing the indications generated by the model with the actual training labels associated with each training chunk. If the model correctly identifies policy-violating content when it is present (true positive), or correctly identifies the absence of such content when it is not present (true negative), the loss value tends to be lower. Conversely, if the model makes errors such as misidentifying non-violating content as violating (false positive) or missing policy-violating content (false negative), the loss value increases.

In various embodiments, several loss functions can be used in this context, such as, for example, cross-entropy loss, mean squared error (MSE), or hinge loss, depending on the specific requirements and characteristics of the detection task. These loss functions quantify the disparity between predicted and actual values, providing a clear metric for model performance during the training process.

The objective of determining the loss value at block 308 is twofold: firstly, it serves as a feedback mechanism to optimize the machine-learning model parameters through backpropagation. By computing gradients of the loss function with respect to the model's parameters, adjustments are made to improve the model's ability to accurately detect policy-violating content. Secondly, the loss value guides the iterative learning process, ensuring that the model converges towards a state where it achieves higher accuracy and reliability in real-time detection tasks.

For example, in the context of an online virtual experience platform, during the training phase, each training chunk of audio is labeled based on whether it contains offensive or inappropriate language. The loss value calculated at block 308 reflects how well the detection model aligns with these labels. By minimizing this loss through iterative training, the model becomes more proficient at distinguishing between acceptable and unacceptable speech, thereby enhancing community standards and fostering a safer online environment for all users.

In some embodiments, the machine learning-based detection model is implemented using a classification head with cross entropy loss as a loss function. The classification head is responsible for producing the final output based on the features extracted by the encoder. The classification head takes the feature vector generated from the input audio chunk and processes it to predict whether the chunk contains policy-violating content. Depending on the complexity of the task, the classification head can produce binary outputs (e.g., policy-violating or non-violating) or multi-class outputs if multiple categories of policy violations are considered.

To train the classification head effectively, the model uses cross-entropy loss as the loss function. Cross-entropy loss is widely used in classification tasks because it measures the difference between the predicted probability distribution and the actual distribution (provided by the training labels). By minimizing this loss, the model is guided to produce predictions that are as close as possible to the true labels.

For example, during training, if a training chunk of audio is labeled as containing hate speech, the classification head outputs the probability that the chunk contains hate speech. The cross-entropy loss function compares this probability to the actual label (1 for hate speech, 0 for non-hate speech) and calculates the loss. This loss value is then used to adjust the model's parameters through backpropagation, reducing the discrepancy between predicted and actual labels over successive training iterations.

At block 310, one or more parameters of the machine learning-based detection model are modified based on the loss value. In various embodiments, these parameters may include the weights and biases of the neural network layers, such as the encoder and classifier. In some embodiments, the modification of these parameters is guided by the gradients of the loss function calculated during backpropagation. This process adjusts the parameters in a direction that reduces the loss, thereby improving the model's accuracy over subsequent iterations of training. Techniques like gradient descent or its variants, such as stochastic gradient descent (SGD) or Adam optimization, are commonly employed to efficiently update parameters based on the loss value.

In some embodiments, the adjustment of parameters serves to fine-tune the model's ability to discern subtle nuances in speech patterns that indicate policy violations. For instance, if the model consistently misidentifies certain types of speech or fails to capture contextual cues effectively, parameter adjustments help rectify these deficiencies.

For example, within an online gaming platform, during the training phase, the parameters of the detection model are iteratively updated based on the loss values computed for each training chunk. This iterative process allows the model to progressively learn and adapt to diverse speech patterns and community standards, ultimately improving its accuracy in identifying and mitigating policy violations in real-time voice communications. As a result, the platform can uphold user safety and compliance with content policies more effectively, fostering a positive and secure online environment for all participants.

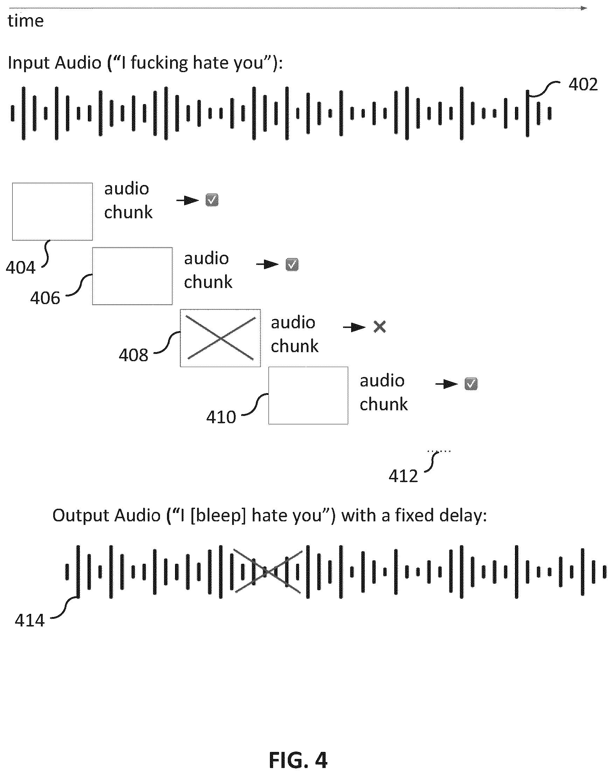

FIG. 4 is a diagram illustrating an example workflow applying a machine learning-based detection model to provide real-time replacement of policy-violating content within voice chat communication, in accordance with some implementations. The process begins with the input audio stream 402, which in this example contains the phrase "I [expletive] hate you." This audio stream is divided into smaller segments, referred to as audio chunks, for granular analysis and processing. The input audio 402 is first divided into a series of discrete audio chunks, including audio chunk 404, audio chunk 406, audio chunk 408, and audio chunk 410. Each chunk represents a segment of the continuous audio stream, processed sequentially by the system.

Audio chunk 1 404 and audio chunk 2 406 are processed by the detection model, which analyzes the audio content to determine if it contains any policy-violating content. In this example, audio chunks 1 and 2 do not contain any objectionable content, as indicated by the check marks associated with these audio chunks shown in Fig. 4. These chunks are subsequently passed through the system without modification.

Audio chunk 3 408, however, is identified by the detection model as containing policy-violating content, specifically the expletive in the phrase "I [expletive] hate you." This detection is marked with an 'X' mark, indicating that the content violates platform policies. The system then modifies this chunk by replacing the offensive word with a bleep, which constitutes a neutral substitute sound. This modification ensures that the output audio does not include the policy-violating content.

Following the processing of audio chunk 3 408, the system continues to analyze subsequent chunks, including audio chunk 4 410. In this example, audio chunk 4, similar to chunks 1 and 2, does not contain any policy-violating content and is indicated with a green check mark, allowing it to pass through unaltered. The figure also includes additional audio chunks 412, representing the continuous nature of the audio stream and the system's ability to process ongoing audio data in real-time. The system continuously analyzes and processes each chunk to ensure compliance with platform policies throughout the entire duration of the audio stream.

The final output audio 414 represents the processed audio stream after the system has made modifications to the audio stream 402 based on the processing described above. In this example, the offensive word in the phrase "I [expletive] hate you" has been replaced, resulting in the modified phrase "I [bleep] hate you" with a fixed delay. This delay accounts for the time required to detect and modify the policy-violating content, ensuring that the output audio maintains a coherent flow while adhering to platform guidelines.

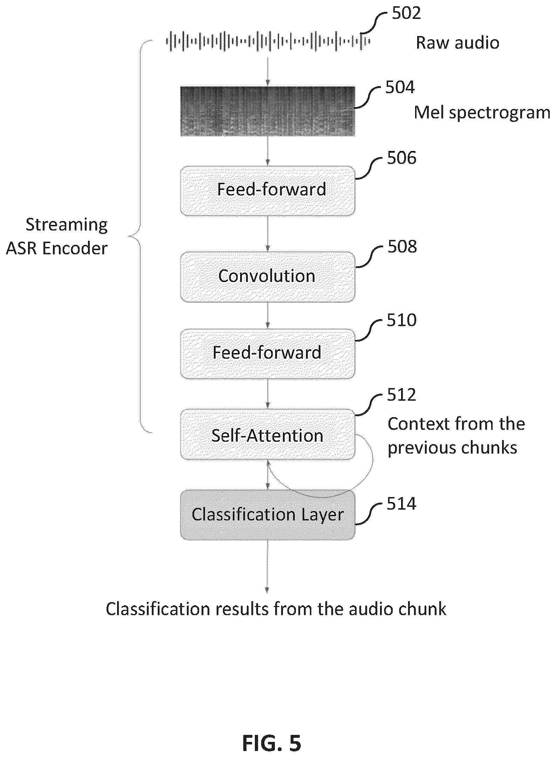

FIG. 5 is a diagram illustrating an example architecture of a machine learning-based detection model for providing real-time replacement of policy-violating content within voice chat communication, in accordance with some implementations. The process begins with the input of raw audio 502, which is represented by the waveform at the top of the figure. This raw audio signal 502 undergoes initial preprocessing to convert it into a format suitable for further analysis. The raw audio 502 is converted into a Mel spectrogram 504, a visual representation of the sound spectrum that highlights different frequency components over time.

The first computational stage in the encoder is a feed-forward layer 506, which is used for signal aggregation and data transformation. This layer processes the Mel spectrogram 504 to produce a more condensed and structured representation of the audio signal. Next, the model employs convolutional layers 508. These layers apply multiple convolutional filters across the input, detecting patterns within short time windows. This stage extracts local features from the speech sequence, capturing essential details like phonetic elements and short-term dependencies in the audio data.

Following the convolutional layers, another feed-forward layer 510 is applied to further transform the aggregated features and prepare them for the self-attention mechanism. The self-attention layers 512 enable the model to attend to informative parts of the speech sequence over a longer context. Unlike the convolutional layers 508, which focus on local windows, the self-attention layers 512 consider a broader range of the audio sequence, incorporating context from previous audio chunks to provide additional information needed for analyzing the current audio chunk. This mechanism captures long-range dependencies and relationships between different parts of the speech,

The final stage of the detection model is the classification layer 514, which produces the model's prediction. This layer takes the output from the self-attention mechanism and applies a binary or multi-class classification head to determine whether the audio chunk contains policy-violating content. The classification result is then produced as output, indicating whether the content is compliant with predefined guidelines or contains elements that need to be flagged or replaced.

For example, in a real-time voice chat application, the raw audio from participants is continuously processed through this pipeline. The convolutional and self-attention layers work together to identify key features and contextual information in the speech, while the classification layer determines if any part of the audio violates the platform's policies. If policy-violating content is detected, appropriate actions such as muting or replacing the offending audio segments can be taken to ensure a safe and respectful communication environment.

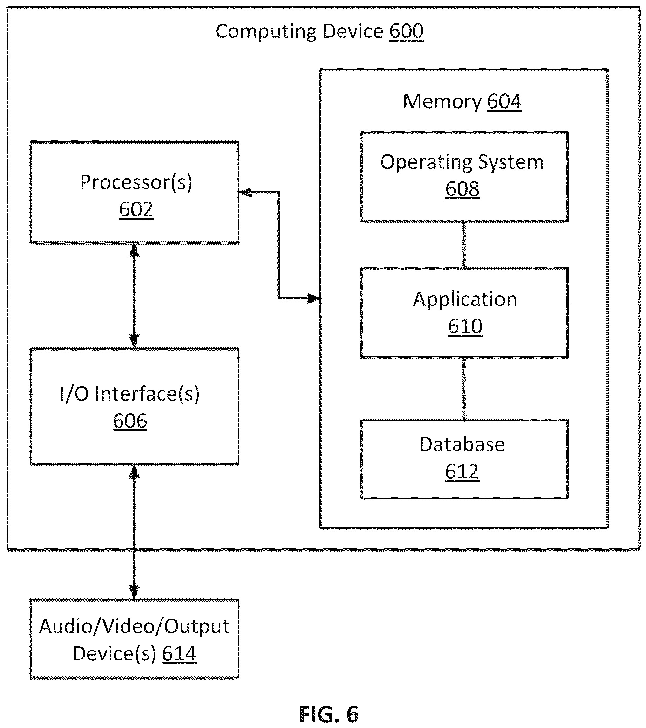

FIG. 6 is a block diagram of an example computing device 600 which may be used to implement one or more techniques described herein. In one example, device 600 may be used to implement a computer device (e.g., 102 and/or 110 of FIG. 1), and perform appropriate method implementations described herein. Computing device 600 can be any suitable computer system, server, or other electronic or hardware device. For example, the computing device 600 can be a mainframe computer, desktop computer, workstation, portable computer, or electronic device (portable device, mobile device, cell phone, smartphone, tablet computer, television, TV set top box, personal digital assistant (PDA), media player, game device, wearable device, etc.). In some implementations, device 600 includes a processor 602, a memory 604, input/output (I/O) interface 606, and audio/video input/output devices 614.

Processor 602 can be one or more processors and/or processing circuits to execute program code and control basic operations of the device 600. A "processor" includes any suitable hardware and/or software system, mechanism or component that processes data, signals or other information. A processor may include a system with a general-purpose central processing unit (CPU), multiple processing units, dedicated circuitry for achieving functionality, or other systems. Processing need not be limited to a particular geographic location, or have temporal limitations. For example, a processor may perform its functions in "real-time," "offline," in a "batch mode," etc. Portions of processing may be performed at different times and at different locations, by different (or the same) processing systems. A computer may be any processor in communication with a memory.

Memory 604 is typically provided in device 600 for access by the processor 602, and may be any suitable computer-readable or processor-readable storage medium, e.g., random access memory (RAM), read-only memory (ROM), Electrical Erasable Read-only Memory (EEPROM), Flash memory, etc., suitable for storing instructions for execution by the processor, and located separate from processor 602 and/or integrated therewith. Memory 604 can store software operating on the server device 600 by the processor 602, including an operating system 608, one or more applications 610, and a database 612 that may store data used by the components of device 600. In some implementations, applications 610 can include instructions that enable processor 602 to perform the functions (or control the functions of) described herein, e.g., some or all of the methods described with respect to FIG. 2. For example, applications 610 can include a module that implements one or more machine learning models used in techniques described herein, e.g., a preprocessing layer, convolutional layers for extracting local features, self-attention layers including, e.g., causal self-attention, and a classification layer with a binary or multi-class classification head with cross entropy loss as the loss function. Database 612 (and/or other connected storage) can store various data used in described techniques, including a real-time audio stream, audio chunks, a list of policy-violating content, etc.

Elements of software in memory 604 can alternatively be stored on any other suitable storage location or computer-readable medium. In addition, memory 604 (and/or other connected storage device(s)) can store instructions and data used in the features described herein. Memory 604 and any other type of storage (magnetic disk, optical disk, magnetic tape, or other tangible media) can be considered "storage" or "storage devices."

I/O interface 606 can provide functions to enable interfacing the server device 600 with other systems and devices. For example, network communication devices, storage devices (e.g., memory and/or data store 120), and input/output devices can communicate via interface 606. In some implementations, the I/O interface can connect to interface devices including input devices (keyboard, pointing device, touchscreen, microphone, camera, scanner, etc.) and/or output devices (display device, speaker devices, printer, motor, etc.).

The audio/video input/output devices 614 can a variety of devices including a user input device (e.g., a mouse, etc.) that can be used to receive user input, audio output devices (e.g., speakers), and a display device (e.g., screen, monitor, etc.) and/or a combined input and display device, which can be used to provide graphical and/or visual output.

For ease of illustration, FIG. 6 shows one block for each of processor 602, memory 604, I/O interface 606, and software blocks of operating system 608 and virtual experience application 610. These blocks may represent one or more processors or processing circuitries, operating systems, memories, I/O interfaces, applications, and/or software engines. In other implementations, device 600 may not have all of the components shown and/or may have other elements including other types of elements instead of, or in addition to, those shown herein. While the online virtual experience server 102 is described as performing operations as described in some implementations herein, any suitable component or combination of components of online virtual experience server 102, client device 110, or similar system, or any suitable processor or processors associated with such a system, may perform the operations described.

Device 600 can be a server device or client device. Example client devices or user devices can be computer devices including some similar components as the device 600, e.g., processor(s) 602, memory 604, and I/O interface 606. An operating system, software and applications suitable for the client device can be provided in memory and used by the processor. The I/O interface for a client device can be connected to network communication devices, as well as to input and output devices, e.g., a microphone for capturing sound, a camera for capturing images or video, a mouse for capturing user input, a gesture device for recognizing a user gesture, a touchscreen to detect user input, audio speaker devices for outputting sound, a display device for outputting images or video, or other output devices. A display device within the audio/video input/output devices 614, for example, can be connected to (or included in) the device 600 to display images pre- and post-processing as described herein, where such display device can include any suitable display device, e.g., an LCD, LED, or plasma display screen, CRT, television, monitor, touchscreen, 3-D display screen, projector, or other visual display device. Some implementations can provide an audio output device, e.g., voice output or synthesis that speaks text.

One or more methods described herein (e.g., method 200 and other described techniques) can be implemented by computer program instructions or code, which can be executed on a computer. For example, the code can be implemented by one or more digital processors (e.g., microprocessors or other processing circuitry), and can be stored on a computer program product including a non-transitory computer readable medium (e.g., storage medium), e.g., a magnetic, optical, electromagnetic, or semiconductor storage medium, including semiconductor or solid state memory, magnetic tape, a removable computer diskette, a random access memory (RAM), a read-only memory (ROM), flash memory, a rigid magnetic disk, an optical disk, a solid-state memory drive, etc. The program instructions can also be contained in, and provided as, an electronic signal, for example in the form of software as a service (SaaS) delivered from a server (e.g., a distributed system and/or a cloud computing system). Alternatively, one or more methods can be implemented in hardware (logic gates, etc.), or in a combination of hardware and software. Example hardware can be programmable processors (e.g., Field-Programmable Gate Array (FPGA), Complex Programmable Logic Device), general purpose processors, graphics processors, Application Specific Integrated Circuits (ASICs), and the like. One or more methods can be performed as part of or component of an application running on the system, or as an application or software running in conjunction with other applications and operating systems.

One or more methods described herein can be run in a standalone program that can be run on any type of computing device, a program run on a web browser, a mobile application ("app") run on a mobile computing device (e.g., cell phone, smart phone, tablet computer, wearable device (wristwatch, armband, jewelry, headwear, goggles, glasses, etc.), laptop computer, etc.). In one example, a client/server architecture can be used, e.g., a mobile computing device (as a client device) sends user input data to a server device and receives from the server the final output data for output (e.g., for display). In another example, all computations can be performed within the mobile app (and/or other apps) on the mobile computing device. In another example, computations can be split between the mobile computing device and one or more server devices.

Although the description has been described with respect to particular implementations thereof, these particular implementations are merely illustrative, and not restrictive. Concepts illustrated in the examples may be applied to other examples and implementations.

The functional blocks, operations, features, methods, devices, and systems described in the present disclosure may be integrated or divided into different combinations of systems, devices, and functional blocks as would be known to those skilled in the art. Any suitable programming language and programming techniques may be used to implement the routines of particular implementations. Different programming techniques may be employed, e.g., procedural or object-oriented. The routines may execute on a single processing device or multiple processors. Although the steps, blocks, operations, or computations may be presented in a specific order, the order may be changed in different particular implementations. In some implementations, multiple steps or operations shown as sequential in this specification may be performed at the same time.

## Claims

1. A computer-implemented method comprising:
obtaining a real-time audio stream of voice chat communication;
dividing the real-time audio stream into a plurality of chunks, wherein each chunk comprises audio from the real-time audio stream from a respective time window;
for each chunk,
providing the audio of the chunk to a machine-learning based detection model; obtaining, as output of the detection model, an indication whether policy-violating content is present in the audio of the chunk, wherein the detection model comprises an encoder that encodes the audio of the chunk into a feature vector and a classifier that generates the indication of whether policy-violating content is present in the audio of the chunk based on the feature vector; and
in response to the indication that policy-violating content is present in the audio of the chunk, modifying the audio of the chunk to at least one of: mute at least a portion of the audio of the chunk or replace the at least a portion of the audio of the chunk with different audio; and
providing the audio stream to a client device for playback at the client device, wherein the audio stream is provided with a delay.

2. The computer-implemented method of claim 1, wherein the feature vector represents speech characteristics of the audio of the chunk, and wherein the encoder comprises one or more convolutional layers that extract local features from the audio of the chunk.

3. The computer-implemented method of claim 2, wherein the encoder further comprises one or more self-attention layers, wherein context from one or more prior chunks is provided to the self-attention layers.

4. The computer-implemented method of any one of claims 1 to 3, further comprising performing pre-processing that includes one or more of:
removing background noise from the audio stream;
converting the audio stream into a particular digital format; and
extracting Mel-Frequency Cepstral Coefficients (MFCCs) from the audio stream.

5. The computer-implemented method of claim 4, wherein the pre-processing is performed by a pre-processing layer of the detection model.

6. The computer-implemented method of any one of claims 1 to 5, wherein the classifier generates the indication as one of: policy-violating content is present in the audio of the chunk or policy-violating content is absent from the audio of the chunk.

7. The computer-implemented method of any one of claims 1 to 6, wherein the classifier generates the indication as a category for the audio of the chunk, wherein the category is one of: non-policy violating content or policy-violating content that is one of: hate speech, swearing, spam, or harassment.

8. The computer-implemented method of claim 7, wherein modifying the audio of the chunk to mute or replace the policy-violating content is based on the category.

9. The computer-implemented method of any one of claims 1 to 8, wherein the detection model is trained to detect whether an input audio chunk includes one or more words from a predefined vocabulary, and wherein the indication that policy-violating content is present in the audio of the chunk is generated when the chunk is determined to include at least one word from the predefined vocabulary.

10. The computer-implemented method of any one of claims 1 to 9, wherein, when the indication is that policy-violating content is present in the audio of the chunk, the detection model further outputs a time-span within the chunk that corresponds to the policy-violating content, and wherein the portion of the audio of the chunk is from within the time-span.

11. The computer-implemented method of claim 10, wherein the policy-violating content is a word, and wherein the portion of the audio of the chunk is the entire time-span and wherein the delay is greater than or equal to the time-span and an inference time of the detection model for the chunk; or
wherein the policy-violating content is a word, and wherein the portion of the audio of the chunk is a portion within the time-span that corresponds to a last syllable of the word, and wherein the delay is greater than or equal to the portion of the time-span and an inference time of the detection model for the chunk.

12. The computer-implemented method of any one of claims 1 to 11, wherein the encoder is a pre-trained encoder from an automatic speech recognition (ASR) model that includes the encoder and a separate decoder that is trained to decode the feature vector into text.

13. The computer-implemented method of any one of claims 1 to 12, wherein the machine-learning based detection model is trained by:
obtaining a training set, wherein each element of the training set comprises:
a training chunk of audio from a respective time window of a real-time audio stream; and
a training label indicative of the presence of policy-violating content in the chunk of audio; and
training the machine-learning based detection model via supervised learning, wherein the training comprises, for each element in the training set:
obtaining, by application of the machine-learning based detection model to the training chunk of audio, an indication of whether policy-violating content is present in the training chunk of audio, wherein the machine-learning based detection model comprises an encoder that encodes the training chunk of audio into a feature vector and a classifier that generates the indication of whether policy-violating content is present in the training chunk of audio based on the feature vector;
determining a loss value based on a comparison of the indication of whether policy-violating content is present in the training chunk of audio and the training label; and
modifying one or more parameters of the machine learning-based detection model based on the loss value.

14. A system comprising:
one or more processors; and
memory storing instructions that, when executed by the one or more processors, cause the system to perform the method of any of claims 1-13.

15. A non-transitory computer-readable medium storing instructions thereon, which when executed by a one or more processors, cause the one or more processors to perform the method of any of claims 1-13.
